# EUROPEAN PATENT APPLICATION

(11) **EP 1 115 054 A2**
(43) Date of publication of application: **11.07.2001**
(21) Application number: 00128514.7
(22) Date of filing: 27.12.2000
(51) Int. Cl.: G06F 1/32

(54) **Information processing apparatus and operating state control method**

(30) Priority: 27.12.1999 JP 37086899
(71) Applicant: KABUSHIKI KAISHA TOSHIBA, Kawasaki-shi (JP)
(72) Inventor: Tada, Masahiro, c/o K. K. Toshiba, Minato-ku, Tokyo 105-8001 (JP); Tanaka, Yoshiteru, c/o K. K. Toshiba, Minato-ku, Tokyo 105-8001 (JP)
(74) Representative: Henkel, Feiler, Hänzel

(57) **Abstract**

A personal computer (1) is capable of communicating with a portable telephone (2) by radio. A radio communication module (204) establishes a radio link to the portable telephone (2). A field strength monitor section (201) detects a field strength in a state where the radio link has been established. A power management control section (202) sets the personal computer (1) in a power save state when the field strength detected by the field strength monitor section (201) lowers to a predetermined level.

## Description

The present invention relates to an information processing apparatus having a radio communication function and an operating state control method therefor.

In recent years, information processing apparatuses such as personal computers use various power management techniques to reduce the power consumption. For example, Japanese Patent Application No. 9-135139 discloses a technique of detecting the presence/absence of a user with an infrared sensor and, when the user is absent for a predetermined time or more, powering off the personal computer.

This technique assumes an environment under which the personal computer is used on a desk, or even at a visit, the user always faces the personal computer and operates it. More specifically, a state where "a person is present in front of the personal computer" is determined as "an environment under which the personal computer is used", and a state where "no person is present in front of the personal computer" is determined as "an environment under which the personal computer is not used".

Recently, however, the use form of a personal computer is greatly changing so that, for example, a personal computer is operated by remote control or used in place of a portable music player. Particularly, with the advent of a radio system such as Bluetooth or HomeRF, the use form of an information processing apparatus represented by a personal computer is expected to further change in the future.

An infrared sensor can irradiate only a very narrow range in front of the personal computer with light. Hence, if the user who uses the personal computer falls outside the infrared range even by a small distance, it is determined that no user is present. For this reason, the conventional method using an infrared sensor cannot cope with a change in use form of the personal computer.

Accordingly, it is an object of the present invention to provide an information processing apparatus capable of appropriately controlling various operating states including power management in accordance with the use form of the information processing apparatus, and an operating state control method therefor.

According to one aspect of the present invention, there is provided an information processing apparatus capable of communicating with a portable device by radio, comprising: means for establishing a radio link to the portable device; means for detecting a field strength in a state where the radio link has been established; and means for setting the information processing apparatus in a power save state when the field strength detected by the detection means lowers to a predetermined value.

According to another aspect of the present invention, there is provided an information processing apparatus capable of communicating with a portable device by radio, comprising: means for establishing a radio link to the portable device; means for detecting a field strength in a state where the radio link has been established; and means for controlling a specified program on the basis of the field strength detected by the detection means.

According to still another aspect of the present invention, there is provided an information processing apparatus capable of communicating with a portable device by radio, comprising: means for executing logon processing to the information processing apparatus from the portable device on the basis of user authentication information transmitted from the portable device by radio; means for detecting a field strength from the portable device; and means for executing logoff processing of canceling a state of logon to the information processing apparatus from the portable device when the field strength detected by the detection means lowers to a predetermined value.

According to still another aspect of the present invention, there is provided an operating state control method of controlling an operating state of an information processing apparatus capable of communicating with a portable device by radio, comprising the steps of: detecting a field strength in a state where a radio link to the portable device has been established; and setting the information processing apparatus in a power save state when the field strength detected in the detection step lowers to a predetermined value.

According to still another aspect of the present invention, there is provided an operating state control method of controlling an operating state of an information processing apparatus capable of communicating with a portable device by radio, comprising the steps of: detecting a field strength in a state where a radio link to the portable device has been established; and controlling a specified program on the basis of the field strength detected in the detection step.

According to still another aspect of the present invention, there is provided an operating state control method of controlling an operating state of an information processing apparatus capable of communicating with a portable device by radio, comprising the steps of: executing logon processing to the information processing apparatus from the portable device on the basis of user authentication information transmitted from the portable device by radio; detecting a field strength from the portable device; and executing logoff processing of canceling a state of logon to the information processing apparatus from the portable device when the field strength detected in the detection step lowers to a predetermined value.

This summary of the invention does not necessarily describe all necessary features so that the invention may also be a sub-combination of these described features.

The invention can be more fully understood from the following detailed description when taken in conjunction with the accompanying drawings, in which:
FIG. 1 is a view showing the basic arrangement of an information processing apparatus used in a radio communication system according to an embodiment of the present invention;
FIG. 2 is a view for explaining the arrangement of the overall radio communication system according to the embodiment;
FIG. 3 is a block diagram showing the hardware arrangement of a personal computer used as an information processing apparatus in the system according to the embodiment;
FIG. 4 is a block diagram showing the software arrangement of a personal computer used in the system according to the embodiment;
FIG. 5 is a block diagram showing the hardware arrangement of a portable telephone used in the system according to the embodiment;
FIG. 6 is a block diagram showing the software arrangement of a portable telephone used in the system according to the embodiment;
FIG. 7 is a flow chart for explaining the first example of the operating state control method executed in the system of the embodiment;
FIG. 8 is a flow chart for explaining the second example of the operating state control method executed in the system of the embodiment;
FIG. 9 is a flow chart for explaining the third example of the operating state control method executed in the system of the embodiment; and
FIG. 10 is a view showing the procedure of logon processing in the system of the embodiment.

The embodiment of the present invention will be described below with reference to the accompanying drawings.

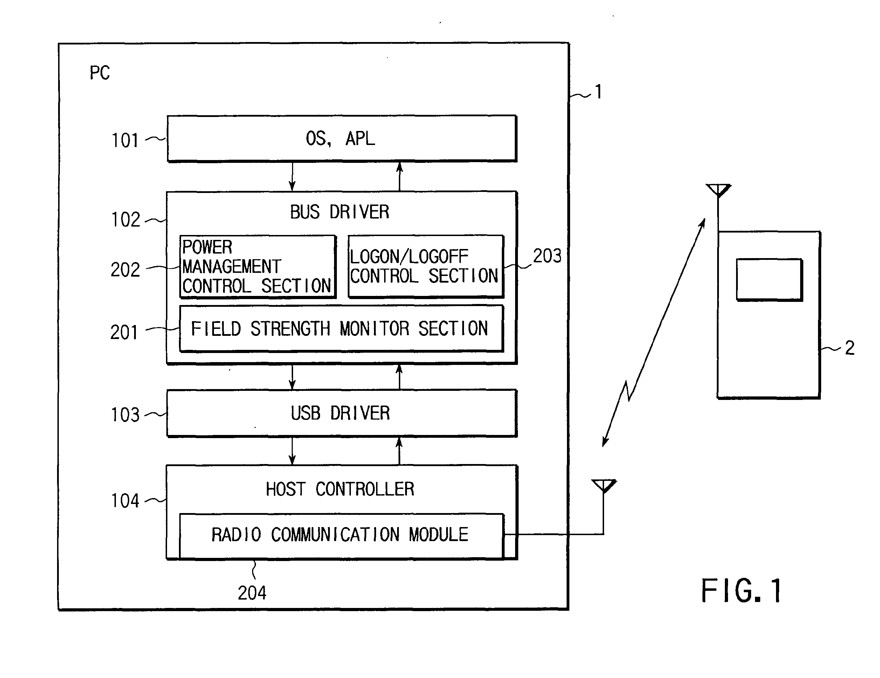

FIG. 1 is a view schematically showing the basic arrangement of an information processing apparatus used in a radio communication system according to an embodiment of the present invention. An information processing apparatus 1 is, for example, a notebook type personal computer (to be referred to as a PC hereinafter) that can be driven by a battery, and can communicate with a portable device such as a portable telephone 2 by establishing a local link thereto by radio. In a state where this radio link is established, a user can, for example, remotely control the PC 1 by using the portable telephone 2 and exchange data such as mail and personal information with the PC 1 and the portable telephone 2.

Host programs 101 including the operating system (OS) and application program (APL) and a BUS driver 102 of Bluetooth are resident on the memory of the PC 1 (Host side). The BUS driver 102 controls a host controller 104 of Bluetooth through a USB driver 103. As shown in FIG. 1, the BUS driver 102 of this embodiment has a field strength monitor section 201, power management control section 202, and logon/logoff control section 203.

The field strength monitor section 201 is a software module for monitoring a change in field strength of a radio wave when the radio link to the portable telephone 2 is being established. The power management control section 202 controls to set the PC 1 from the normal operating state to the power save state or manages power to restore the PC 1 from the power save state to the normal operating state on the basis of the field strength detected by the field strength monitor section 201. With such power management control using the field strength, control can be appropriately executed in consideration of the distance relationship or environment between the PC 1 and the user (user who carries the valid portable telephone 2 capable of linking to the PC 1 by radio).

The logon/logoff control section 203 executes control for logon or logoff by radio to or from the PC 1 in accordance with a request from the portable telephone 2. When the field strength lowers to a predetermined value or less, it is determined that the PC 1 is not used, and logoff processing is automatically executed.

The host controller 104 has a radio communication module 204 constructed by a link manager, link controller, and the like. The radio communication module 204 executes physical link control to the portable telephone 2.

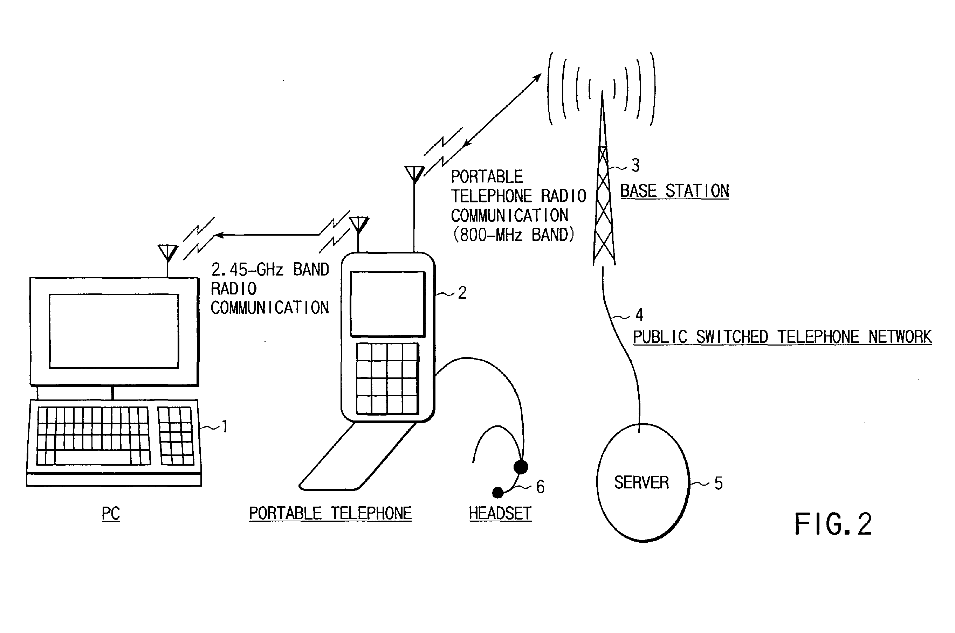

FIG. 2 is a view showing the arrangement of the overall radio communication system according to this embodiment.

The portable telephone 2 transmits/receives speech or data to/from portable telephone base stations 3, which are installed in various areas, by using radio waves in the 800-MHz band. The base station 3 encompasses a predetermined radio area, in which communication with the portable telephone 2 is implemented. A server 5 is connected to the base station 3 through a public switched telephone network 4. The user of the portable telephone 2 can also perform speech communication by using a headset 6.

This portable telephone 2 has a radio communication interface for transmitting/receiving radio waves in the 2.45-GHz band to/from the PC 1, in addition to a radio communication interface for transmitting/receiving radio waves in the 800-MHz band to/from the base station 3. The portable telephone 2 also has an LCD for displaying data, a key operation portion for inputting data, and the like.

The PC 1 and portable telephone 2 are connected to each other through radio waves in a specific frequency band which are different from the radio waves used in the portable telephone system. More specifically, a 2.45-GHz band Bluetooth system is used. The Bluetooth system is a short-range radio communication standard, and implements radio communication within about 10 m by using radio waves in the 2.45-GHz band.

The PC 1 includes an antenna portion for transmitting/receiving radio waves in the 2.45-GHz band to/from the portable telephone 2, an LCD used as a display monitor, a keyboard for inputting data, and the like.

The hardware and software arrangements of the PC 1 and portable telephone 2 will be described below separately.

### (Arrangement of Personal Computer)

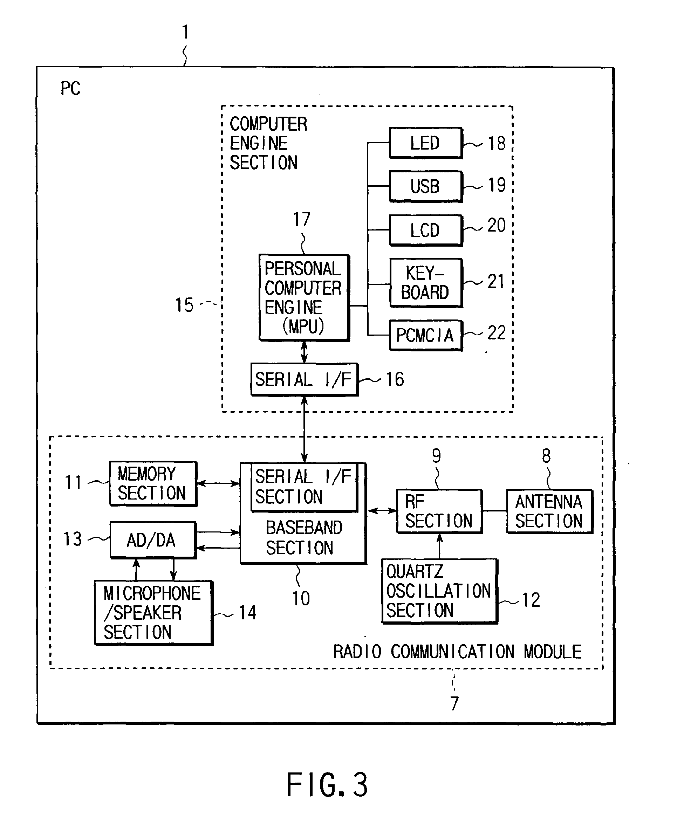

FIG. 3 is a block diagram showing the hardware arrangement of the PC 1. The hardware portion required to implement this system will be mainly described below.

The PC 1 incorporates a radio communication module 7 for communicating with the portable telephone 2 by using radio waves in the 2.45-GHz band. The radio communication module 7 includes an antenna section 8, an RF (Radio Frequency) section 9, a baseband section 10, a memory section 11, a quartz oscillation section 12, an AD/DA conversion section 13, and a microphone/ speaker section 14. A similar radio communication module is also incorporated in the portable telephone 2. The radio communication module 7 is connected to a computer engine section 15 as a main unit of the personal computer through a serial interface 16 such as a USB.

The antenna section 8 is a section that implements radio communication with the portable telephone 2 and transmits/receives radio waves in the 2.45-GHz band. In the reception mode, the RF section 9 mixes the radio wave received through the antenna section 8 with a fundamental frequency signal oscillated by the quartz oscillation section 12 to convert the radio wave into an intermediate frequency signal, and then demodulates it into a digital signal that can be processed by the baseband section 10. The baseband section 10 performs protocol processing. The signal input through the antenna section 8 and RF section 9 is converted into a data string that can be processed by the CPU in the baseband section 10.

In the transmission mode, in a reverse procedure to that in the reception mode, the baseband section 10 converts transmission data into a signal that can be processed by the RF section 9 in accordance with a predetermined protocol, and the RF section 9 modulates the signal into a radio wave in the 2.45-GHz band, thereby transmitting it from the antenna section 8.

The microphone/speaker section 14 is a device for inputting/outputting speech signals, and is connected to the baseband section 10 through the AD/DA conversion section 13.

The computer engine section 15 includes a personal computer engine 17 including a CPU, memory, and peripheral control circuits, an LED (Light Emitting Diode) 18 for performing alarm display and the like, a USB interface 19 for connecting a peripheral device based on USB (Universal Serial Bus) standards, an LCD (Liquid Crystal Display) 20 used as a display monitor, a keyboard 21 for data input, PCMCIA (Personal Computer Memory Card International Association) interface 22 for mounting a PC card, and the like.

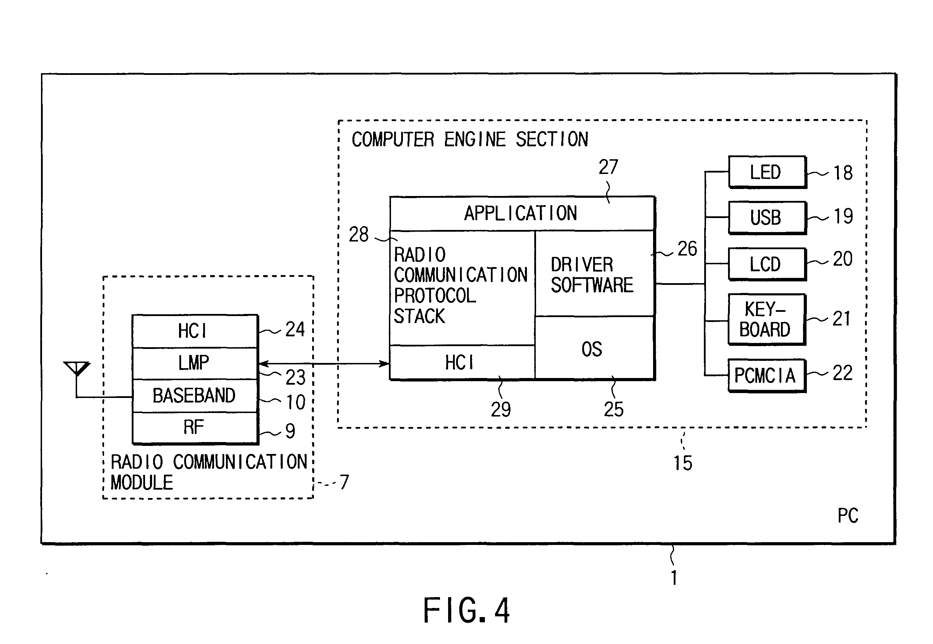

FIG. 4 is a block diagram showing the software arrangement of the PC 1. FIG. 4 shows the structure of the PC 1 incorporating a radio communication protocol stack for 2.4-GHz band radio communication on the computer engine section 15 side.

On the radio communication module 7 side of the PC 1, as shown in FIG. 4, the RF section 9 and baseband section 10, which are hardware, are provided, and an LMP (Link Management Protocol) 23 for controlling a radio link with the radio communication apparatus on the portable telephone 2 side by radio waves and an HCI (Host Control Interface) 24 for performing serial interface processing for the computer engine section 15 are incorporated in the baseband section 10.

The computer engine section 15 incorporates a 2.45-GHz band radio communication protocol stack 28, an HCI 29 for performing serial interface processing on the radio communication module 7 side, and the like, in addition to an OS (Operating System) 25, drive software 26 for controlling various peripheral devices, and various applications 27 such as wordprocessor software, spreadsheet software, electronic mail software, and system software for implementing a remote control function, which are incorporated as standard software for the PC.

### (Arrangement of Portable Telephone)

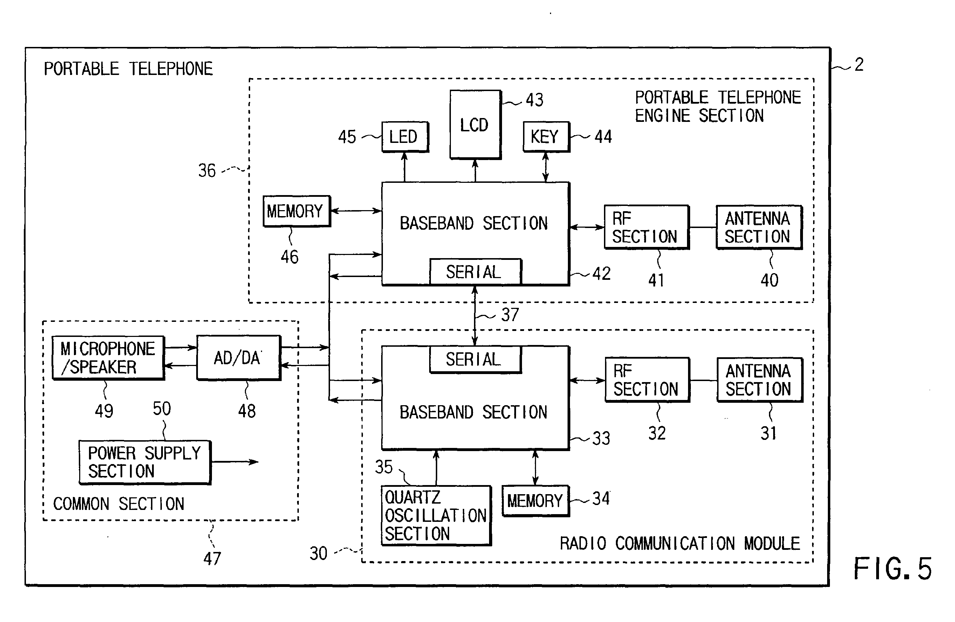

FIG. 5 is a block diagram showing the hardware arrangement of the portable telephone 2. The hardware portion required to implement this system will be mainly described.

As a radio communication module 30 for communicating with the PC 1 by using radio waves in the 2.45-GHz band, an antenna section 31, RF section 32, baseband section 33, memory section 34, and quartz oscillation section 35 are incorporated in the portable telephone 2. The radio communication module 30 and a portable telephone engine section 36 are connected to each other through a serial interface 37.

The antenna section 31 is a section for transmitting/receiving radio waves in the 2.45-GHz band to implement radio communication with the PC 1. In the reception mode, the RF section 32 mixes the radio wave received through the antenna section 31 with a fundamental frequency signal oscillated by the quartz oscillation section 35 to convert the radio wave into an intermediate frequency signal, and then demodulates it into a digital signal that can be processed by the baseband section 33. The baseband section 33 performs protocol processing. The signal input through the antenna section 31 and RF section 32 is converted into a data string that can be processed by the CPU in the baseband section 33.

In the transmission mode, in a reverse procedure to that in the reception mode, the baseband section 33 converts transmission data into a signal that can be processed by the RF section 32 in accordance with a predetermined protocol, and the RF section 32 modulates the signal into a radio wave in the 2.45-GHz band, thereby transmitting it from the antenna section 31.

The portable telephone engine section 36 includes an LCD 43 for data display, a key operation section 44 for data input, an LED 45 for alarm display and the like, a memory 46 for data storage, and the like, in addition to an antenna section 40 for a portable telephone, an RF section 41, and a baseband section 42.

As a common section 47, an AD/DA conversion section 48, microphone/speaker 49, and power supply section 50 are provided.

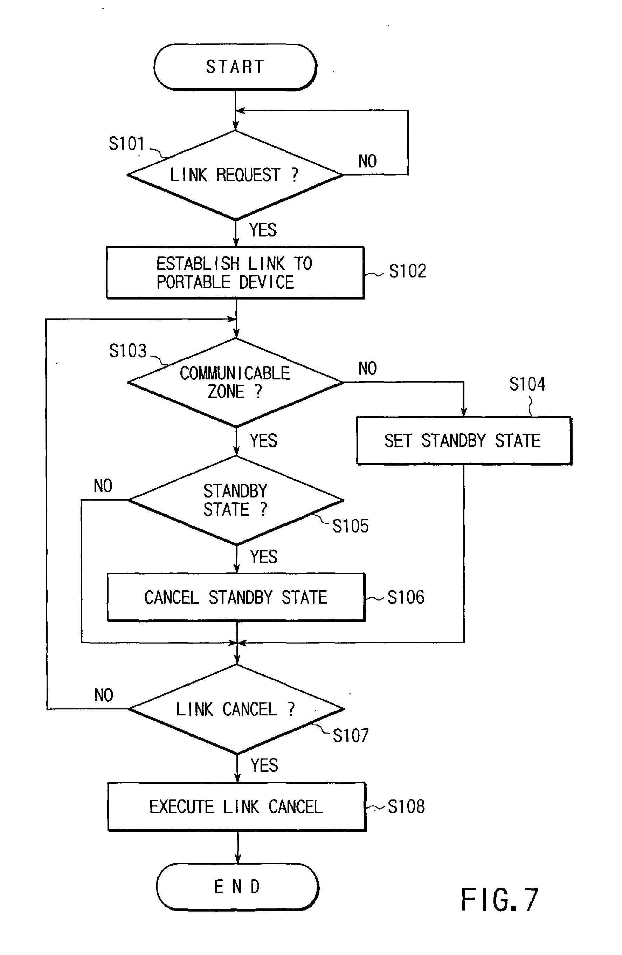

FIG. 6 is a block diagram showing the software arrangement of the portable telephone 2. FIG. 6 shows the structure of the portable telephone 2 in which a radio communication protocol stack for 2.45-GHz band radio communication is mounted on the portable telephone engine section 36 side.

As shown in FIG. 6, the RF section 32 and baseband section 33, which are hardware, are arranged on the radio communication module 30 side of the portable telephone 2. An LMP (Link Management Protocol) 51 for controlling a radio link to the radio communication apparatus on the PC 1 side by radio waves and an HCI (Host Control Interface) 52 for performing serial interface processing for the portable telephone engine section 36 are mounted in the baseband section 33.

In addition to the RF section 41, the baseband section 42, and a portable telephone protocol stack 53, which are mounted as standard equipment for a portable telephone, the portable telephone engine section 36 incorporates an application 54 including system software and the like for implementing a remote control function, a radio communication protocol stack 55 for 2.45-GHz radio communication, and an HCI 56 for performing serial interface processing for the radio communication module 30 side.

### (First Example of Operating State Control Method)

The first example of the operating state control method of this embodiment will be described next.

The flow chart in FIG. 7 shows processing of connecting the PC 1 and portable telephone 2 using 2.45-GHz band radio communication and dynamically changing the operating state of the PC 1 in accordance with whether the portable telephone is in or outside the communicable zone.

First, on the PC 1 side, under the control of the BUS driver 102 or radio communication application, the presence/absence of a radio link establishment request to the portable telephone 2 is checked (step S101). The radio link establishment request is input by the user's direct operation of the PC 1 or transmitted from the portable telephone 2 by radio. When a radio link establishment request to the portable telephone 2 is received (YES in step S101), control of the baseband section 10 is started to establish a radio link using 2.45-GHz band radio communication, and processing of linking the PC to the 2.45-GHz band radio communication device on the portable telephone 2 side is executed (step S102). After establishing the radio link, it is always determined whether the portable telephone 2 is present in the range of the radio wave, i.e., in the communicable zone, in accordance with the field strength (step S103).

When the user who is carrying the portable telephone 2 moves from a communicable zone to an incommunicable zone, the field strength becomes less than the communicable value, and communication is disabled. Triggered by the change in field strength or the communication disabled state, a change from the communicable zone to the incommunicable zone is detected. In this case, it is determined that the PC 1 is not used, and processing of setting the PC 1 in the standby state is executed (step S104). In the standby state, the operation of the PC 1 is stopped. The standby state is one of the forms of power save state for low power consumption. As the standby state, a memory suspend state in which the current operating state is saved in the memory, and then, almost all devices except the memory and radio communication module are powered off, or a hibernation state in which the current operating state and the memory contents are saved in a disk device, and then, almost all devices except the radio communication module are powered off can be used. In addition to stop of the operation of the PC 1, rotation of the disk device may be stopped, the display may be turned off, or the CPU operation speed may be reduced. In any selected state, the 2.45-GHz band radio hardware module maintains the radio communicable state while keeping the power ON and regularly searches whether the portable telephone is in the communicable zone.

When the PC 1 is set in the standby state, and in this state, the user who is carrying the portable telephone 2 returns from the incommunicable zone to the communicable zone (YES in step S105), processing of restoring the PC 1 from the standby state to the normal operating state is executed (step S106). If the link is disconnected in moving from the incommunicable zone to the communicable zone, link establishment processing is automatically executed.

When link cancel is requested by the user's direct operation of the PC 1 or radio transmission from the portable telephone 2 (step S107), processing of canceling the radio communication link to the portable telephone 2 is executed (step S108).

As described above, in this example, triggered by the movement of the portable telephone 2 from the radio communicable range (to the incommunicable zone) or from the incommunicable zone to the communicable zone, power management control is executed.

### (Second Example of Operative State Control Method)

The second example of the operating state control method of this embodiment will be described next.

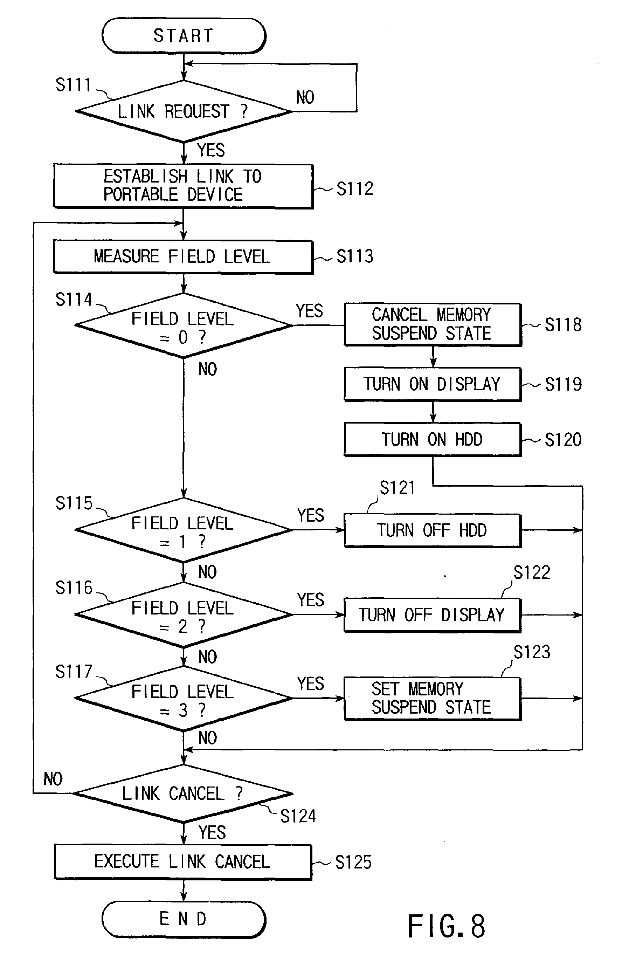

The flow chart in FIG. 8 shows processing of connecting the PC 1 and portable telephone 2 using 2.45-GHz band radio communication and dynamically changing the operating state of the PC 1 in accordance with the field strength of the radio communication.

First, on the PC 1 side, under the control of the BUS driver 102 or radio communication application, the presence/absence of a radio link establishment request to the portable telephone 2 is checked (step S111). The radio link establishment request is input by the user's direct operation of the PC 1 or transmitted from the portable telephone 2 by radio. When a radio link establishment request to the portable telephone 2 is received (YES in step S111), control of the baseband section 10 is started to establish a radio link using 2.45-GHz band radio communication, and processing of linking the PC to the 2.45-GHz band radio communication device on the portable telephone 2 side is executed (step S112). After establishing the radio link, the field strength of the radio wave from the other party side is always measured (step S113), and the current field strength levels 0 to 3 are determined (steps S114 to S117).

In this embodiment, the measurement range includes level 0 to level 3. Level 0 corresponds to the highest field strength at which the user is using the PC 1. Level 1 corresponds to a field strength lower than that of level 0, at which the user is near the PC 1 but does not actually require processing on the PC 1. Level 2 corresponds to a lower field strength at which the user cannot look at the display of the PC 1. Level 3 means an unmeasurable field strength, i.e., the so-called incommunicable state, so the PC 1 is not used at all.

When the radio link is established, and in this state, the field strength lowers to "level 3" (YES in step S117), processing of setting the memory suspend state is executed, as described above (step S123), and the operation of the PC 1 is stopped. When the measured field strength is "level 2" (YES in step S116), processing of turning off the display is executed (step S122). When the measured field strength is "level 1" (YES in step S115), processing of powering off the hard disk device (HDD) is executed (step S121).

When the field strength is "level 0" (YES in step S114), memory suspend cancel processing (step S118), display ON processing (step S119), and HDD ON processing (step S120) are executed. Thus, the PC 1 is restored from the power save state to the normal operating state.

The HDD OFF, display OFF, and memory suspend will be described by exemplifying ACPI (Advanced Configuration and Power Interface) which functions on the OS. The ACPI determines the specifications of the system, CPU, and devices for which system states, CPU states, and device states are defined, respectively. The system states include stages S0 to S5: execution in progress S0, quick standby state S1, CPU reset S2, memory suspend state S3, hibernation state S4, and shutdown state S5. The device sleep states include an ON state D0, first standby state D1, second standby state D2, and OFF state D3.

In this example, the HDD OFF and display OFF in the sequence are used as the device OFF state D3, and the memory suspend is used as the memory suspend state S3 of the system. However, the states are not particularly limited, and an optimum power save mode in the system and device sleep states S0 to S5 and DO to D3 is used.

In addition, even when the mode shifts to the power OFF state of the devices (HDD and display) of the PC 1, the 2.45-GHz band radio hardware module maintains the radio communicable state while keeping the power ON and regularly searches the field strength.

Finally, it is determined whether link cancel is requested (step S124). If YES in step S124, processing of canceling the radio communication link to the portable telephone 2 is executed.

When power management control is executed using the field strength, not whether the user is in front of the PC 1 but the distance relationship or environment between the PC 1 and the user can be determined. For example, the field strength when the user operates the PC 1 by remote control from the portable telephone 2 and looks at data in the PC 1 displayed on the portable telephone 2 while keeping the PC 1 in the bag is different from that when the user communicates with the portable telephone 2 while looking at the display of the PC 1, and appropriate power management control according to the difference in use environment can be performed. Furthermore, for the other party of linked communication can be identified by each connection handle as a physical channel identifier, and the field strength can be measured for each connection handle. For this reason, the field strength of a radio wave from the other party of linked communication can be correctly identified without any influence of electromagnetic waves from other unlinked devices.

### (Third Example of Operative State Control Method)

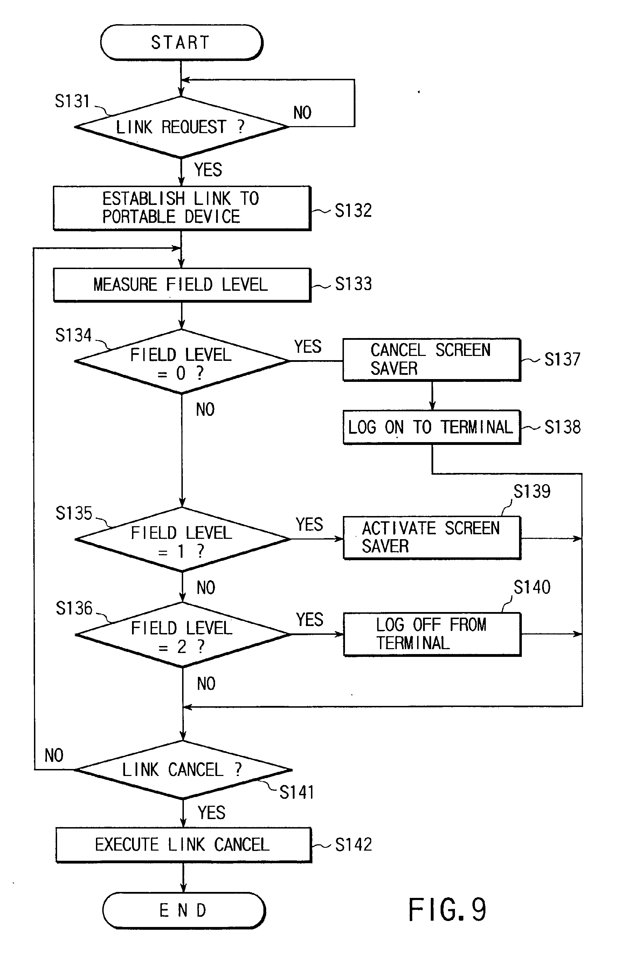

The third example of the operating state control method of this embodiment will be described next with reference to the flow chart in FIG. 9.

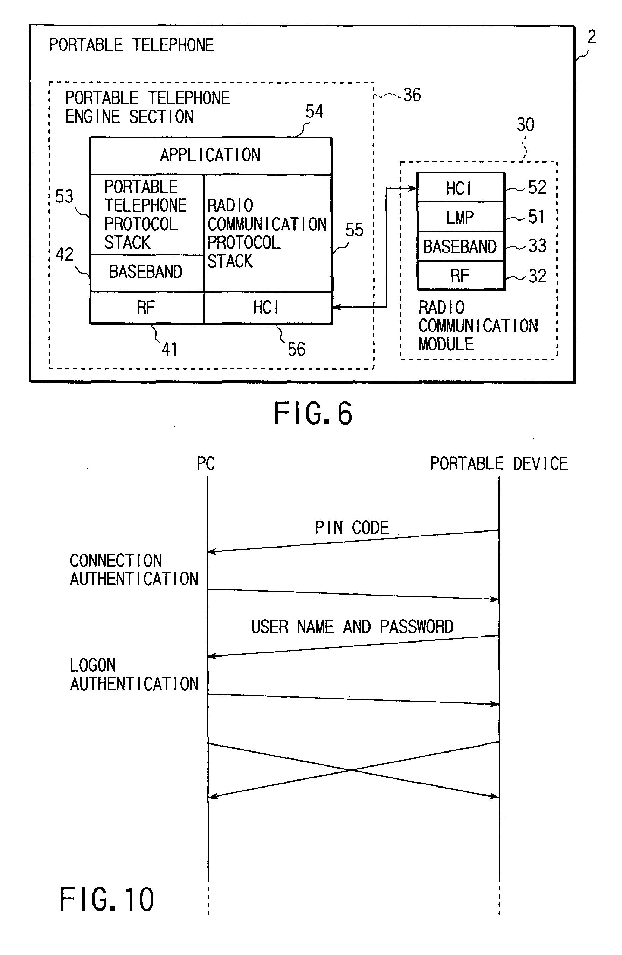

In this example, the resources of the PC 1 can be used by logging on to the PC 1 from the portable telephone 2 by radio. This logon is performed by transmitting a PID from the portable telephone 2 to the PC 1 for connection authentication and then transmitting user authentication information including a user name and password from the portable telephone 2 to the PC 1 to execute authentication processing of the user authentication information (logon authentication), as shown in FIG. 10. When logon authentication is successful, use of the PC 1 is enabled. Until logoff processing is executed, the PC 1 can be continuously used. However, persons other than the authentic user who has logged in can also operate the PC 1 until logoff, resulting in a security problem. In this example, it is determined on the basis of the field strength whether the user who has logged in is using the PC 1, and if not, logoff processing is automatically executed. A detailed procedure will be described below.

First, on the PC 1 side, under the control of the BUS driver 102 or radio communication application, the presence/absence of a radio link establishment request to the portable telephone 2 is checked (step S131). The radio link establishment request is input by the user's direct operation of the PC 1 or transmitted from the portable telephone 2 by radio. When a radio link establishment request to the portable telephone 2 is received (YES in step S131), control of the baseband section 10 is started to establish a radio link using 2.45-GHz band radio communication, and processing of linking the PC to the 2.45-GHz band radio communication device on the portable telephone 2 side is executed (step S132). After establishing the radio link, the field strength of the radio wave from the other party side is always measured (step S133), and the current field strength levels 0 to 2 are determined (steps S134 to S136).

In this example, the measurement range includes level 0 to level 2. Level 0 corresponds to the highest field strength at which the user is using the PC 1. Level 1 corresponds to a field strength lower than that of level 0, at which the user is near the PC 1 but does not use the PC 1. Level 2 corresponds to the lowest field strength at which the PC 1 is not used at all. This state is dangerous because the user may not keep the PC 1 in his/her sight and not be conscious of misuse by the third party.

When the radio link is established, and in this state, the field strength lowers to "level 2" (YES in step S136), the above-described dangerous state occurs, so a program for executing logoff processing is activated to cancel the logon state (step S140). Unless the authentic user logs in again, the PC 1 cannot be used. For example, a user program is inhibited from being used. When the measured field strength is "level 1" (YES in step S135), a screen saver is activated to hidden the window under operation and temporarily set the logoff state (step S139).

When it is detected that the measured field strength is "level 0" (YES in step S134), screen saver cancel processing is executed first (step S137). For this screen saver cancel processing, it is checked whether the screen saver has already been activated, and only if it is, the screen saver is canceled. Next, a program for logon authentication is activated to execute terminal logon processing (step S138). For this terminal logon processing, terminal logon data (user authentication information) is registered in the portable telephone 2 in advance and transmitted to the PC 1 to execute the logon authentication, as described above.

Finally, it is determined whether a cancel request for the radio communication link is received (step S141). If YES in step S141, processing of canceling the radio communication link to the portable telephone 2 is executed (step S142).

When logoff processing is automatically executed, the security is ensured, and the cumbersome logoff operation need not be performed, so the convenience largely improves.

In the operating state control shown in FIG. 9, a specified program is activated/terminated in accordance with the radio field strength from the other party of linked radio communication. Not only the logon/logoff program but also, e.g., a user program (mail or scheduler) for personal information management may be automatically stopped to prevent a third party from looking at the personal information, or the operating system may be automatically activated/shut down.

As described above, in this embodiment, various operating state control operations represented by power management can be appropriately executed in accordance with the use form of the PC 1. Operative state control of the PC has been described above using an example of the radio communication system constructed by the PC 1 and portable telephone 2. However, operating state control on the portable telephone 2 side or operating state control of various electronic devices except a PC can also be done according to the same procedure as described above. In addition, in place of the portable telephone 2, a portable device dedicated to operate the PC 1 by remote control using a radio wave, a security card for radio authentication, or portable music player may be used.

As has been described above in detail, according to the present invention, various operating state control operations represented by power management can be appropriately executed in accordance with the use form of, e.g., an information processing apparatus. Particularly, when the operating state is controlled in accordance with a radio field strength, distance relationship or environment between the information processing apparatus and the user can be appropriately determined, so the method can cope with various use forms of the information processing apparatus.

## Claims

1. An information processing apparatus capable of communicating with a portable device by radio, characterized by comprising:
means (204) for establishing a radio link to the portable device;
means (201) for detecting a field strength in a state where the radio link has been established; and
means (202) for setting the information processing apparatus in a power save state when the field strength detected by said detection means lowers to a predetermined value.

2. The apparatus according to claim 1, characterized in that said setting means (202) returns said information processing apparatus from the power save state when the field strength detected by said detection means (201) exceeds a predetermined value.

3. The apparatus according to claim 1, characterized in that
the power save state has a plurality of stages with different power consumption amounts, and
said setting means (202) determines a stage of the power save state to be set on the basis of the field strength detected by said detection means (201).

4. An information processing apparatus capable of communicating with a portable device by radio, characterized by comprising:
means (204) for establishing a radio link to the portable device;
means (201) for detecting a field strength in a state where the radio link has been established; and
means (203) for controlling a specified program on the basis of the field strength detected by said detection means (201).

5. The apparatus according to claim 4, characterized in that
the specified program is a program for executing logoff processing of canceling a state of logon to said information processing apparatus from said portable device, and
said controlling means (203) activates the program when the field strength detected by said detection means (201) lowers to a predetermined value.

6. The apparatus according to claim 4, characterized in that
the specified program is a user program for personal information management, and
said controlling means (203) inhibits the user program when the field strength detected by said detection means (201) lowers to a predetermined value.

7. An information processing apparatus capable of communicating with a portable device by radio, characterized by comprising:
means (203) for executing logon processing to said information processing apparatus from said portable device on the basis of user authentication information transmitted from the portable device by radio;
means (201) for detecting a field strength from the portable device; and
means (203) for executing logoff processing of canceling a state of logon to said information processing apparatus from said portable device when the field strength detected by said detection means (201) lowers to a predetermined value.

8. The apparatus according to claim 7, characterized by further comprising:
means (102) for determining whether or not the portable device for which the radio link has been established leaves a radio communicable zone in accordance with the field strength detected by said detection means; and
means (202) for setting said information processing apparatus in the power save state when the portable device for which the radio link has been established leaves the radio communicable zone.

9. The apparatus according to claim 8, characterized by further comprising means (202) for returning said information processing apparatus from the power save state to an operating state when the portable device moves from an incommunicable zone to the radio communicable zone.

10. An operating state control method of controlling an operating state of an information processing apparatus capable of communicating with a portable device by radio, characterized by comprising the steps of:
detecting a field strength in a state where a radio link to the portable device has been established (S113); and
setting the information processing apparatus in a power save state when the field strength detected in the detection step lowers to a predetermined value (S115 to S117, S121 to S123).

11. The method according to claim 10, characterized by further comprising a step of returning the portable device from the power save state when the field strength detected in the detection step exceeds a predetermined value (S114, S118 to S120).

12. The method according to claim 10, characterized by further comprising a step of
determining a stage of the power save state to be set from a plurality of stages with different power consumption amounts on the basis of the field strength detected in the detection step (S114 to S117).

13. An operating state control method of controlling an operating state of an information processing apparatus capable of communicating with a portable device by radio, characterized by comprising the steps of:
detecting a field strength in a state where a radio link to the portable device has been established (S133); and
controlling a specified program on the basis of the field strength detected in the detection step (S134 to S140).

14. The method according to claim 13, characterized in that
the specified program is a program for executing logoff processing of canceling a state of logon to said information processing apparatus from said portable device, and
the controlling step comprises activating the program when the field strength detected in the detection step lowers to a predetermined value (S136, S140).

15. The method according to claim 13, characterized in that
the specified program is a user program for personal information management, and
said controlling step comprises inhibits the user program when the field strength detected in the detection step lowers to a predetermined value.

16. An operating state control method of controlling an operating state of an information processing apparatus capable of communicating with a portable device by radio, characterized by comprising the steps of:
executing logon processing to said information processing apparatus from said portable device on the basis of user authentication information transmitted from the portable device by radio (S138);
detecting a field strength from the portable device (S133); and
executing logoff processing of canceling a state of logon to said information processing apparatus from said portable device when the field strength detected in the detection step lowers to a predetermined value (S136, S140).

17. The method according to claim 16, characterized by further comprising the steps of:
determining whether or not the portable device for which the radio link has been established leaves a radio communicable zone in accordance with the field strength detected by said detection means (S103); and
setting said information processing apparatus in the power save state when the portable device for which the radio link has been established leaves a radio communicable zone (S104).

18. The method according to claim 17, characterized by further comprising a step of returning said information processing apparatus from the power save state to an operating state when the portable device moves from an incommunicable zone to the radio communicable zone (S105, S106).
